# EUROPÄISCHE PATENTSCHRIFT

(11) **EP 2 482 427 B1**
(45) Veröffentlichungstag und Bekanntmachung des Hinweises auf die Patenterteilung: **05.08.2020**
(21) Anmeldenummer: 12000369.4
(22) Anmeldetag: 20.01.2012
(51) Int. Cl.: H02K 5/22, H02K 11/00, H02K 7/106

(54) **Elektrischer Antrieb**
Electric drive
Entraînement électrique

(30) Priorität: 31.01.2011 DE 102011009919
(43) Veröffentlichungstag der Anmeldung: 01.08.2012
(73) Patentinhaber: Schneider Electric Automation GmbH, 97828 Marktheidenfeld (DE)
(72) Erfinder: Jess, Ralf, Dipl.-Ing. (FH), 77955 Ettenheim (DE)
(74) Vertreter: Huwer, Andreas

(56) Entgegenhaltungen:
- DE-A1- 10 109 797
- DE-A1- 10 337 107
- DE-U1- 8 502 977
- DE-U1-202004 012 820

## Beschreibung

Die Erfindung betrifft einen elektrischen Antrieb nach dem Oberbegriff von Anspruch 1.

Ein derartiger elektrischer Antrieb, der einen in einem Gehäuse angeordneten Elektromotor aufweist, ist aus DE 85 02 972 U1 bekannt. An dem Gehäuse ist ein Anschlussbereich vorgesehen ist, an dem elektrische Anschlusskontakte zum Verbinden des Antriebs mit externen elektrischen Anschlussleitungen angeordnet sind. Das Gehäuse hat ein erstes, mit dem Elektromotor verbundenes Gehäuseteil und ein die elektrischen Anschlusskontakte aufweisendes zweites Gehäuseteil, das an einer ersten Verbindungssteile mit dem ersten Gehäuseteil verbindbar ist. Das erste Gehäuseteil weist zusätzlich zu der ersten Verbindungsstelle eine zweite Verbindungsstelle auf. Die Verbindungsstellen und das zweite Gehäuseteil sind derart ausgestaltet, dass das zweite Gehäuseteil wahl- oder wechselweise an der ersten Verbindungsstelle oder der zweiten Verbindungsstelle mit dem ersten Gehäuseteil verbindbar ist. Diejenige Verbindungsstelle, an der das zweite Gehäuseteil nicht angeordnet ist, kann durch einen Deckel verschlossen werden.

Ein weiterer elektrischer Antrieb, der einen in einem Gehäuse angeordneten Elektromotor aufweist, ist aus DE 103 37 107 A1 bekannt. An dem Gehäuse ist ein Klemmenkasten vorgesehen, in dem elektrische Anschlusskontakte zum Verbinden des Antriebs mit externen elektrischen Anschlussleitungen und ein in Schichttechnik ausgeführter Bremswiderstand angeordnet sind. Der Klemmenkasten dient als mechanischer Schutz für den Bremswiderstand und ermöglicht eine große Wärmeabfuhr von dem Bremswiderstand.

Aus DE 20 2004 012 820 U1 ist ferner ein elektrischer Antrieb bekannt, der einen in einem Gehäuse angeordneten Elektromotor hat. Dabei hat das Gehäuse mit dem Elektromotor verbundenes erstes Gehäuseteil und ein als Gehäusedeckel ausgebildetes zweites Gehäuseteil. An dem Gehäusedeckel sind elektrische Steckkupplungen angeordnet, die Anschlusskontakte aufweisen. Die Anschlusskontakte sind über flexible elektrische Verbindungsleitungen mit einer an dem ersten Gehäuseteil angeordneten Leiterplatte verbunden, auf der elektronische Bauelemente für eine Endstufe zum Ansteuern der Motorwicklung des Elektromotors angeordnet sind. Über die Steckkupplungen kann der Antrieb mit externen elektrischen Anschlussleitungen verbunden werden, die zu den Steckkupplungen passende Steckkupplungsgegenstücke aufweisen. Der elektrische Antrieb hat sich in der Praxis vor allem deshalb als vorteilhaft erwiesen, weil der Gehäusedeckel in zwei zueinander verdrehten Einbaulagen mit dem ersten Gehäuseteil verbindbar ist. Dadurch ist es möglich, die Abgangsrichtung der Steckkupplungen bzw. der mit diesen verbindbaren Anschlussleitungen vor Ort an die jeweilige Einbausituation des elektrischen Antriebs anzupassen. Dennoch weist der Antrieb auch noch Nachteile auf. So erfordern die flexiblen elektrischen Verbindungsleitungen zwischen den Steckkupplungen und der Leiterplatte bei der Herstellung des Antriebs einen gewissen Montageaufwand. Der elektrische Antrieb ist daher noch relativ teuer.

Es ist auch bereits bekannt, einen elektrischen Antrieb mit unterschiedlichen Steckerabgangsvarianten zu fertigen, bei denen die Steckkupplungen unterschiedlich am Gehäuse des Antriebs angeordnet sind. Die Varianten erhöhen jedoch den Aufwand für die Fertigung und den Vertrieb der elektrischen Antriebe sowie für die Lagerung und die Beschaffung von Ersatzteilen, insbesondere weil für jede dieser Varianten in der Regel jeweils auch noch eine größere Anzahl von Motorvarianten bereitgestellt werden muss. Ungünstig ist außerdem, dass bei einem solchen Antrieb die Abgangsrichtung der Steckkupplung nicht nachträglich an die Einbausituation angepasst werden kann. Oft stellt sich jedoch erst beim Einbau des Antriebs beim Anwender heraus, welche Steckerabgangsvariante benötigt wird.

Es besteht deshalb die Aufgabe, einen elektrischen Antrieb der eingangs genannten Art zu schaffen, der kostengünstig herstellbar ist und auf einfache Weise an unterschiedliche Einbausituationen angepasst werden kann.

Diese Aufgabe wird mit den Merkmalen des Anspruchs 1 gelöst.

In vorteilhafter Weise ist es dadurch möglich, die elektrischen Anschlusskontakte je nach Einbausituation unterschiedlich am Gehäuse zu positionieren, so dass die Lage des Anschlussbereichs auf einfache Weise an die jeweilige Einbausituation angepasst werden kann. Dabei ist es sogar möglich, die Lage des Anschlussbereichs nachträglich, beispielsweise am Einbauort zu verändern. Durch die zweite Verbindungsstelle reduziert sich die vom Hersteller bereitzustellende Anzahl von Antriebsvarianten, was einen kostengünstigen elektrischen Antrieb ermöglicht.

Erfindungsgemäß weist das Gehäuse ein drittes Gehäuseteil auf, an dem mindestens ein mit einer Wicklung des Elektromotors und/oder einem Steuer- und/oder Logikmodul für den Elektromotor elektrisch verbindbarer Ballastwiderstand angeordnet ist, wobei das dritte Gehäuseteil derart an die Verbindungsstellen angepasst ist, dass es wahl- oder wechselweise mit der ersten Verbindungsstelle oder der zweiten Verbindungsstelle verbindbar ist. Somit kann bei einer ersten Konfiguration des Antriebs das die Anschlusskontakte aufweisende zweite Gehäuseteil an der ersten Verbindungsstelle und das den Ballastwiderstand aufweisende dritte Gehäuseteil an der zweiten Verbindungsstelle angeordnet sein. Bei einer zweiten Konfiguration des Antriebs können das erste und dritte Gehäuseteil miteinander vertauscht sein, d.h. das dritte Gehäuseteil ist an der ersten Verbindungsstelle und das zweite Gehäuseteil an der zweiten Verbindungsstelle angeordnet. Dadurch ist es möglich, bei beiden Konfigurationen jeweils beide Verbindungsstellen zu nutzen. Der elektrische Antrieb ist dadurch kostengünstig mit kompakten Abmessungen herstellbar.

Vorteilhaft ist, wenn die erste Verbindungsstelle und die zweite Verbindungsstelle an quer zueinander verlaufenden Wandungsbereichen des ersten Gehäuseteils angeordnet sind, insbesondere an einer Seitenwand und einer Rückwand des ersten Gehäuseteils. Der elektrische Antrieb kann dann auf einfache Weise an die in der Praxis am häufigsten auftretenden Anschlusssituationen angepasst werden.

Bei einer bevorzugten Ausführungsform der Erfindung weist das erste Gehäuseteil an der ersten Verbindungsstelle und der zweiten Verbindungsstelle jeweils mindestens ein elektrisches Steckverbindungsteil auf, wobei an dem zweiten Gehäuseteil und/oder dem dritten Gehäuseteil wenigstens ein zu den Steckverbindungsteilen passendes Gegensteckverbindungsteil angeordnet ist, und wobei die Steckverbindungsteile und das wenigstens eine Gegensteckverbindungsteil derart angeordnet und ausgestaltet sind, dass bei mit der ersten Verbindungsstelle oder der zweiten Verbindungsstelle verbundenem zweiten oder dritten Gehäuseteil an dem Steckverbindungsteil angeordnete elektrische Kontaktelemente diesen zugeordnete elektrische Gegenkontaktelemente des Gegensteckverbindungsteil kontaktieren. Dadurch können die elektrischen Verbindungen zwischen den elektrischen Anschlusskontakten des zweiten Gehäuseteils und/oder dem Ballastwiderstand des dritten Gehäuseteils und der an dem ersten Gehäuseteil angeordneten Wicklung des Elektromotors bzw. dem Steuer- und/oder Logikmodul kostengünstig mit Hilfe von Standardsteckverbindungen realisiert werden. Durch die aus den Steckverbindungsteilen und den Gegensteckverbindungsteilen gebildeten Steckverbindungen wird außerdem eine einfache Montage des zweiten bzw. dritten Gehäuseteils an den Verbindungsstellen des ersten Gehäuseteils ermöglicht.

Zweckmäßigerweise sind die Steckverbindungsteile durch Randbereiche mindestens einer Leiterplatte gebildet, auf der elektrische Bauelemente eines Steuer- und/oder Logikmoduls für den Elektromotor angeordnet sind, wobei die elektrischen Kontaktelemente durch auf der Leiterplatte befindliche Leiterbahnen gebildet sind. Dadurch kann die Steckverbindung besonders kostengünstig mit kompakten Abmessungen realisiert werden.

Vorzugsweise hat das zweite Gehäuseteil mindestens ein elektrisches Steckkupplungsteil, an dem die elektrischen Anschlusskontakte angeordnet sind. An den externen elektrischen Anschlussleitungen kann dann ein zu dem Steckkupplungsteil passendes Gegensteckkupplungsteil angeordnet sein, so dass die Anschlussleitungen auf einfache Weise lösbar mit den Anschlusskontakten verbindbar sind.

Vorteilhaft ist, wenn das zweite Gehäuseteil im Wesentlichen plattenförmig ausgebildet ist, und wenn das Gegensteckverbindungsteil an der dem ersten Gehäuseteil zugewandten Rückseite und das mindestens eine elektrische Steckkupplungsteil an der Vorderseite des zweiten Gehäuseteils angeordnet ist. Durch die plattenformige Ausgestaltung ermöglicht das zweite Gehäuseteil kompakte Abmessungen.

Bei einer zweckmäßigen Ausgestaltung der Erfindung umfassen die elektrischen Anschlusskontakte mindestens einen Anschlusskontakt zur Stromversorgung des Elektromotors und/oder des Steuer- und/oder Logikmoduls und wenigstens einen weiteren Anschlusskontakt zur Kommunikation des Steuer- und/oder Logikmoduls mit einer übergeordneten Steuerung. Dabei kann der elektrische Antrieb insbesondere als integrierte Baugruppe ausgestaltet sein, der zusätzlich zu einem bürstenlosen Elektromotor ein Steuer- und/oder Logikmodul und ein Netzteil zur Stromversorgung des Elektromotors und ggf des Steuer- und/oder Logikmoduls aus einem Wechsel- oder Drehstromnetz aufweist.

Nachfolgend ist ein Ausführungsbeispiel der Erfindung anhand der Zeichnung näher erläutert. Es zeigt
- Fig. 1: einen elektrischen Antrieb, der einen Elektromotor und ein daran angeordnetes Gehäuse aufweist, in dem ein Steuer- und/oder Logik-modul angeordnet ist, wobei das Gehäuse mehrere Gehäuseteile aufweist, die in Vormontagestellung angeordnet sind,
- Fig. 2: den in Fig. 1 gezeigten Antrieb in einer ersten Montagestellung, und
- Fig. 3: den in Fig. 1 gezeigten Antrieb in einer zweiten Montagestellung.

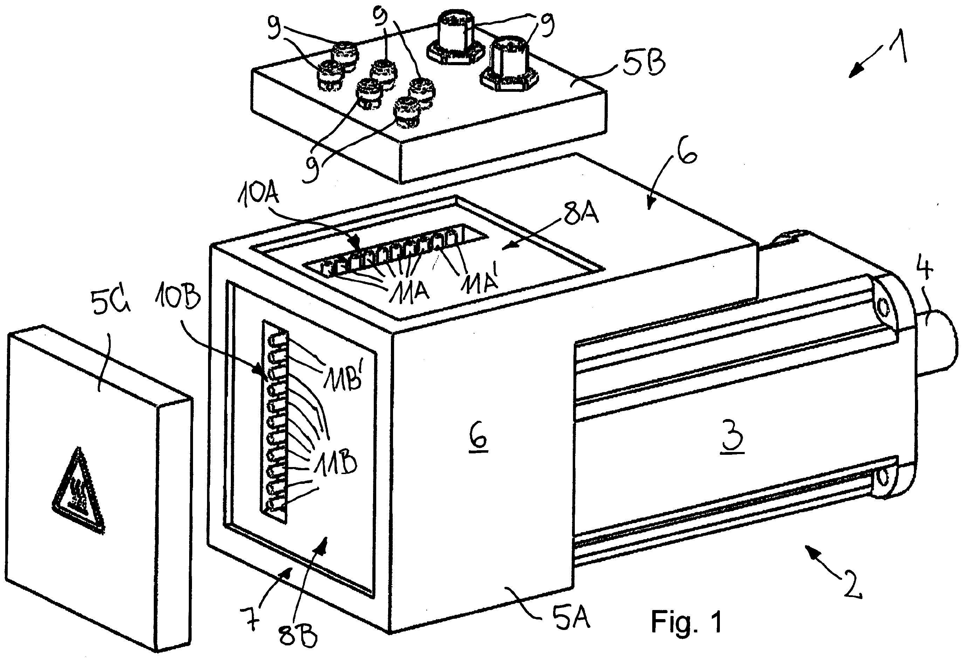

Ein in Fig. 1 im Ganzen mit 1 bezeichneter elektrischer Antrieb weist einen elektronisch kommutierten Elektromotor 2 auf, der mit einem Gehäuse verbunden ist, in dem ein Steuer- und/oder Logikmodul für den Elektromotor 2 angeordnet ist.

Der Elektromotor 2 hat einen Stator 3 mit einer Motorwicklung und einen um eine Rotationsachse drehbar am Stator 3 gelagerten Rotor mit einer Motorwelle 4. Der Elektromotor 2 kann beispielsweise ein Servomotor sein, der einen Stator mit einem weichmagnetischen Kern und einen permanentmagnetischen Rotor hat, an dessen Umfang eine Anzahl von abwechselnd in zueinander entgegen gesetzte Richtungen magnetisierten Magnetpolen angeordnet sind, die zum Erzeugen einer Drehbewegung über einen Luftspalt magnetisch mit dem Stator 3 zusammenwirken. Der Elektromotor 2 kann auch als Schrittmotor ausgestaltet sein.

Das Steuer- und/oder Logikmodul umfasst eine Endstufe zur Ansteuerung der Motorwicklung, eine mit der Endstufe in Steuerverbindung stehende Kommutierungselektronik, welche die zur Ansteuerung der Endstufe benötigten Kommutierungssingnale generiert, Sensoren zur Bestimmung der Relativposition zwischen Stator 3 und Rotor, einen Controller, mittels dem Fahrprofile generiert werden können, eine Kommunikationsschnittstelle, wie zum Beispiel einen Feldbus, zum Verbinden des Steuer- und/oder Logikmoduls mit einer übergeordneten Steuerung, ein erstes Netzteil zur Stromversorgung des Elektromotors aus einem Wechsel- oder Drehstromnetz, und ein zweites Netzteil, das zur Stromversorgung des Controllers und der Kommutierungselektronik dient. Das Steuer- und/oder Logikmodul hat mehrere in dem Gehäuse angeordnete Leiterplatten, die mit elektronischen Bauelementen bestückt sind, welche über Leiterbahnen miteinander verbunden sind.

Wie in Fig. 1 besonders gut erkennbar ist, weist das Gehäuse ein erstes Gehäuseteil 5A, ein zweites Gehäuseteil 5B und ein drittes Gehäuseteil 5C auf, die lösbar miteinander verbindbar sind. Das erste Gehäuseteil 5A ist über in der Zeichnung nicht näher dargestellte Verbindungselemente, wie zum Beispiel Schrauben, fest mit dem Stator 3 des Elektromotors 2 verbunden. Das erste Gehäuseteil 5A hat mehrere Außenwände 6, die mit ihren Erstreckungsebenen quer zueinander angeordnet sind und im Wesentlichen parallel zur Rotationsachse der Motorwelle 4 verlaufen. Außerdem weist das erste Gehäuseteil 5A eine dem Elektromotor 2 abgewandte Rückwand 7 und einen der Rückwand 7 abgewandt gegenüberliegenden Befestigungsflansch für den Stator 3 auf Die Rückwand 7 ist in einer Ebene angeordnet, die quer und insbesondere etwa orthogonal zur Rotationsachse der Motorwelle 4 verläuft.

Am zweiten Gehäuseteil 5B ist ein Anschlussbereich vorgesehen, an dem mehrere Steckkupplungsteile 9 angeordnet sind, die in der Zeichnung nicht näher dargestellte elektrische Anschlusskontakte zum Verbinden des Antriebs 1 mit externen elektrischen Anschlussleitungen aufweisen. An den Anschlussleitungen sind zu den Steckkupplungsteilen 9 passende Gegensteckkupplungsteile angeordnet, die auf die Steckkupplungsteile 9 aufsteckbar sind und mittels einer Verriegelungseinrichtung in Verbindungsstellung mit diesen verriegelbar sind. An den Gegensteckkupplungsteilen sind Gegenkontakte angeordnet, die in Verbindungsstellung jeweils mindestens einen ihnen zugeordneten Anschlusskontakt des betreffenden Stecckupplungsteiles 9 kontaktieren.

Am dritten Gehäuseteil 5C ist ein in der Zeichnung nicht näher dargestellter Ballastwiderstand angeordnet. Das dritte Gehäuseteil 5C weist eine elektrisch isolierende, wärmeleitende Vergussmasse auf, in die der Ballastwiderstand mit Abstand zu den Außenflächen des dritten Gehäuseteils 5C eingelassen ist. Die Vergussmasse kann beispielsweise ein Keramikmaterial oder eine zementartiger Werkstoff sein. Der Ballastwiderstand kann durch einen wendel- und/oder mäanderförmig verlaufenden Widerstandsdraht gebildet sein. Die während des Betriebs des elektrischen Antriebs in dem Ballastwiderstand auftretende Verlustwärme wird über die Vergussmasse zu den Außenflächen des dritten Gehäuseteils 5C geleitet und dort hauptsächlich in Form von Strahlungswärme an die Umgebung abgegeben.

Wie in Fig. 1 erkennbar ist, sind das zweite Gehäuseteil 5B und das dritte Gehäuseteil 5C jeweils etwa plattenförmig ausgebildet.

An dem ersten Gehäuseteil 5A ist eine erste Verbindungsstelle 8A und eine zweite Verbindungsstelle 8B vorgesehen, an denen das erste Gehäuseteil 5Ajeweils wahl- oder wechselweise mit dem zweiten Gehäuseteil 5B oder dem dritten Gehäuseteil 5C verbindbar ist. Die erste Verbindungsstelle 8A ist an einer etwa parallel zur Rotationsachse der Motorwelle 4 angeordneten Seitenwand des ersten Gehäuses 5A vorgesehen und die zweite Verbindungsstelle 8B ist an der Rückwand 7 des ersten Gehäuseteils 5A angeordnet.

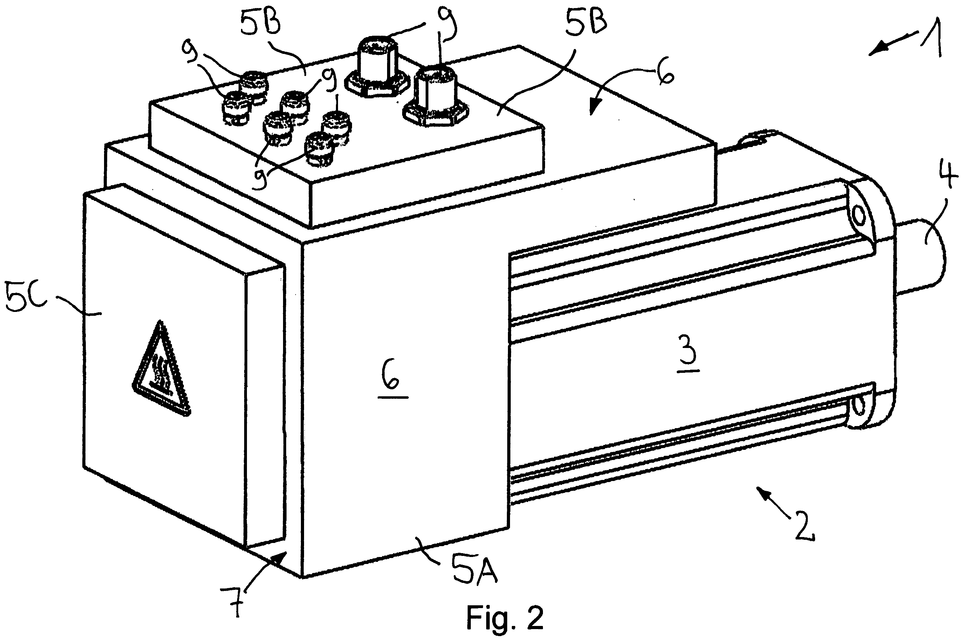

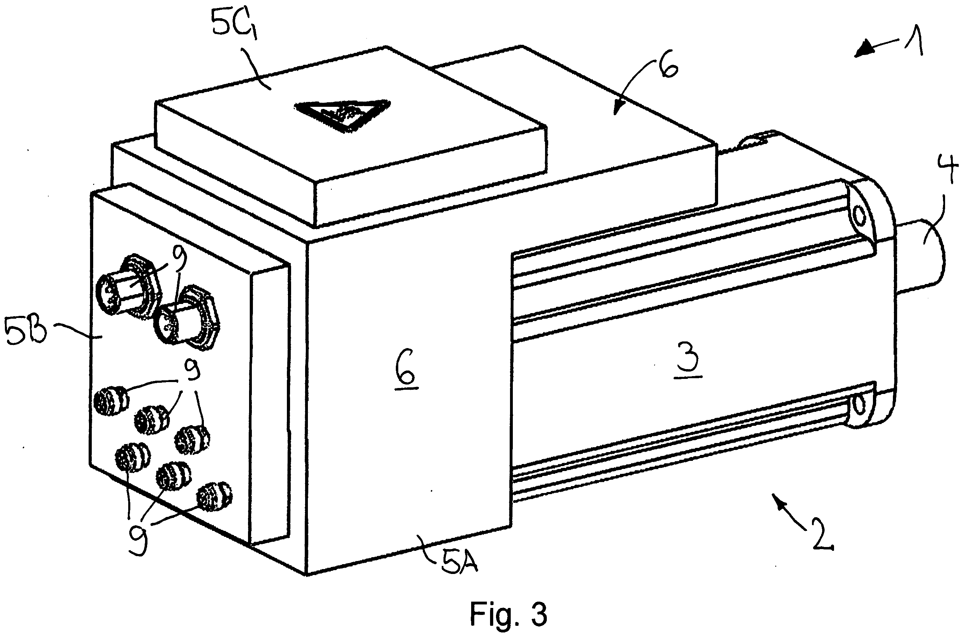

In Verbindungsstellung der Gehöuseteile 5A, 5B, 5C ist jeweils an einer der beiden Verbindungsstellen 8A, 8B das erste Gehäuseteil 5A und an der anderen Verbindungsstelle 8B, 8A das zweite Gehäuseteil 5B angeschlossen. Bei einer ersten, in Fig. 2 gezeigten Montagestellung bzw. Konfiguration, ist das zweite Gehäuseteil 5B an der ersten Verbindungsstelle 8A und das dritte Gehäuseteil 5B an der zweite Verbindungsstelle 8B angeschlossen. Bei einer zweiten, in Fig. 3 gezeigten Montagestellung, ist das dritte Gehäuseteil 5C ist an der ersten Verbindungsstelle 8A und das zweite Gehäuseteil 5B an der zweiten Verbindungsstelle 8B angeschlossen.

In Fig. 1 ist erkennbar, dass das erste Gehäuseteil 5A an der ersten Verbindungsstelle 8A und der zweiten Verbindungsstelle 8B jeweils ein elektrisches Steckverbindungsteil 10A, 10B aufweist, an dem elektrische Kontaktelemente 11A, 11A', 11B. 11B' angeordnet sind. Die beiden Steckverbindungsteile 10A, 10B sind baugleich zueinander ausgestaltet und weisen jeweils eine Anzahl von ersten Kontaktelementen 1 1A, 11B und zweiten Kontaktelementen 11A', 11B' auf, die über Leiterbahnen mit den elektronischen Bauelementen des Steuer- und/oder Logikmoduls elektrisch verbunden sind.

An dem zweiten Gehäuseteil 5B und dem dritten Gehäuseteil 5C ist jeweils ein zu den Steckverbindungsteilen 10A, 10B passendes, in der Zeichnung nicht näher dargestelltes Gegensteckverbindungsteil angeordnet. Das Gegensteckverbindungsteil des zweiten Gehäuseteils 5B hat erste elektrische Gegenkontakte und das Gegensteckverbindungsteil des dritten Gehäuseteils 5C hat zweite elektrische Gegenkontakte. Bei mit der ersten Verbindungsstelle 8A oder der zweiten Verbindungsstelle 8B verbundenem zweiten Gehäuseteil 5B kontaktieren die ersten elektrischen Gegenkontakte jeweils ein ihnen zugeordnetes erstes Kontaktelement 11A, 11B des betreffenden Steckverbindungsteils 10A, 10B. Bei mit der ersten Verbindungsstelle 8A oder der zweiten Verbindungsstelle 8B verbundenem dritten Gehäuseteil 5B kontaktieren die zweiten elektrischen Gegenkontakte jeweils ein ihnen zugeordnetes zweites Kontaktelement 11A', 11B' des betreffenden Steckverbindungsteils 10A, 10B.

## Patentansprüche

1. Elektrischer Antrieb (1), der einen in oder an einem Gehäuse angeordneten Elektromotor (2) hat, wobei an dem Gehäuse ein Anschlussbereich vorgesehen ist, an dem elektrische Anschlusskontakte zum Verbinden des Antriebs (1) mit externen elektrischen Anschlussleitungen angeordnet sind, wobei das Gehäuse zumindest ein erstes, eine erste und eine zweite Verbindungsstelle (8A, 8B) aufweisendes, mit dem Elektromotor (2) verbundenes Gehäuseteil (5A) und ein die elektrischen Anschlusskontakte aufweisendes zweites Gehäuseteil (5B) hat, das wahl- oder wechselweise an der ersten oder der zweiten Verbindungsstelle (8A, 8B) mit dem ersten Gehäuseteil (5A) verbindbar ist, **dadurch gekennzeichnet, dass** das Gehäuse ein drittes Gehäuseteil (5C) aufweist, an dem mindestens ein mit einer Wicklung des Elektromotors (2) und/oder einem Steuer- und/oder Logikmodul für den Elektromotor (2) elektrisch verbindbarer Ballastwiderstand angeordnet ist, und dass das dritte Gehäuseteil (5C) derart wahl- oder wechselweise mit der ersten Verbindungsstelle (8A) oder der zweiten Verbindungsstelle (8B) verbindbar ist, dass bei einer ersten Konfiguration das zweite Gehäuseteil (5B) an der ersten Verbindungsstelle (8A) und das dritte Gehäuseteil (5C) an der zweiten Verbindungsstelle (8B) und bei einer zweiten Konfiguration das dritte Gehäuseteil (5C) an der ersten Verbindungsstelle (8A) und das zweite Gehäuseteil (5B) an der zweiten Verbindungsstelle (8B) angeordnet ist.

2. Elektrischer Antrieb (1) nach Anspruch 1, **dadurch gekennzeichnet, dass** die erste Verbindungsstelle (8A) und die zweite Verbindungsstelle (8B) an quer zueinander verlaufenden Wandungsbereichen des ersten Gehäuseteils (5A) angeordnet sind, insbesondere an einer Seitenwand und einer Rückwand (7) des ersten Gehäuseteils (5A).

3. Elektrischer Antrieb (1) nach Anspruch 1 oder 2, **dadurch gekennzeichnet, dass** das erste Gehäuseteil (5A) an der ersten Verbindungsstelle (8A) und der zweiten Verbindungsstelle (8B) jeweils mindestens ein elektrisches Steckverbindungsteil (10A, 10B) aufweist, dass an dem zweiten Gehäuseteil (5B) und/oder dem dritten Gehäuseteil (5C) wenigstens ein zu den Steckverbindungsteilen (10A, 10B) passendes Gegensteckverbindungsteil angeordnet ist, und dass die Steckverbindungsteile (10A, 10B) und das wenigstens eine Gegensteckverbindungsteil derart angeordnet und ausgestaltet sind, dass bei mit der ersten Verbindungsstelle (8A) oder der zweiten Verbindungsstelle (8B) verbundenem zweiten Gehäuseteil (5B) oder dritten Gehäuseteil (5C) an dem Steckverbindungsteil (10A, 10B) angeordnete elektrische Kontaktelemente diesen zugeordnete elektrische Gegenkontaktelemente des Gegensteckverbindungsteils kontaktieren.

4. Elektrischer Antrieb (1) nach Anspruch 3, **dadurch gekennzeichnet, dass** die Steckverbindungsteile (10A, 10B) durch Randbereiche mindestens einer Leiterplatte gebildet sind, auf der elektrische Bauelemente des Steuer- und/oder Logikmoduls für den Elektromotor (2) angeordnet sind, und dass die elektrischen Kontaktelemente durch auf der Leiterplatte befindliche Leiterbahnen gebildet sind.

5. Elektrischer Antrieb (1) nach einem der Ansprüche 1 bis 4, **dadurch gekennzeichnet, dass** das zweite Gehäuseteil (5B) mindestens ein elektrisches Steckkupplungsteil (9) hat, an dem die elektrischen Anschlusskontakte angeordnet sind.

6. Elektrischer Antrieb (1) nach Anspruch 5, **dadurch gekennzeichnet, dass** das zweite Gehäuseteil (5B) plattenförmig ausgebildet ist, und das Gegensteckverbindungsteil an der dem ersten Gehäuseteil (5A) zugewandten Rückseite und das mindestens eine elektrische Steckkupplungsteil (9) an der Vorderseite des zweiten Gehäuseteils (5B) angeordnet ist.

7. Elektrischer Antrieb (1) nach einem der Ansprüche 1 bis 6, **dadurch gekennzeichnet, dass** die elektrischen Anschlusskontakte mindestens einen Anschlusskontakt zur Stromversorgung des Elektromotors (2) und/oder des Steuer- und/oder Logikmoduls und wenigstens einen weiteren Anschlusskontakt zur Kommunikation des Steuer- und/oder Logikmoduls mit einer übergeordneten Steuerung umfasst.

## Claims

1. Electric drive (1) which has an electric motor (2) which is arranged in or on a housing, wherein a connection region is provided on the housing, electrical connection contacts for connecting the drive (1) to external electrical connection lines being arranged on the said connection region, wherein the housing has at least one first housing part (5A), which has a first and a second connecting point (8A, 8B) and is connected to the electric motor (2), and a second housing part (5B), which has electrical connection contacts and can be selectively or alternately connected to the first housing part (5A) at the first or at the second connecting point (8A, 8B), **characterized in that** the housing has a third housing part (5C) on which at least one ballast resistor, which can be electrically connected to a winding of the electric motor (2) and/or to a control and/or logic module for the electric motor (2), is arranged, and **in that** the third housing part (5C) can be selectively or alternately connected to the first connecting point (8A) or to the second connecting point (8B) in such a way that, in a first configuration, the second housing part (5B) is arranged at the first connecting point (8A) and the third housing part (5C) is arranged at the second connecting point (8B) and, in a second configuration, the third housing part (5C) is arranged at the first connecting point (8A) and the second housing part (5B) is arranged at the second connecting point (8B).

2. Electric drive (1) according to Claim 1, **characterized in that** the first connecting point (8A) and the second connecting point (8B) are arranged on wall regions of the first housing part (5A) that run transversely in relation to one another, in particular on a side wall and a rear wall (7) of the first housing part (5A).

3. Electric drive (1) according to Claim 1 or 2, **characterized in that** the first housing part (5A) has in each case at least one electrical plug-in connecting part (10A, 10B) at the first connecting point (8A) and at the second connecting point (8B), **in that** at least one mating plug-in connecting part which matches the plug-in connecting parts (10A, 10B) is arranged on the second housing part (5B) and/or on the third housing part (5C), and **in that** the plug-in connecting parts (10A, 10B) and the at least one mating plug-in connecting part are arranged and configured in such a way that, in a second housing part (5B) or third housing part (5C) which is connected to the first connecting point (8A) or to the second connecting point (8B), electrical contact elements which are arranged on the plug-in connecting part (10A, 10B) make contact with electrical mating contact elements of the mating plug-in connecting part that are associated with the said electrical contact elements.

4. Electric drive (1) according to Claim 3, **characterized in that** the plug-in connecting parts (10A, 10B) are formed by edge regions of at least one printed circuit board on which electrical components of the control and/or logic module for the electric motor (2) are arranged, and **in that** the electrical contact elements are formed by conductor tracks which are located on the printed circuit board.

5. Electric drive (1) according to one of Claims 1 to 4, **characterized in that** the second housing part (5B) has at least one electrical plug-in coupling part (9) on which the electrical connection contacts are arranged.

6. Electric drive (1) according to Claim 5, **characterized in that** the second housing part (5B) is of plate-like design, and the mating plug-in connecting part is arranged on the rear side which faces the first housing part (5A) and the at least one electrical plug-in coupling part (9) is arranged on the front side of the second housing part (5B).

7. Electric drive (1) according to one of Claims 1 to 6, **characterized in that** the electrical connection contacts comprise at least one connection contact for supplying power to the electric motor (2) and/or to the control and/or logic module and at least one further connection contact for communication between the control and/or logic module and a superordinate controller.

## Revendications

1. Système d'entraînement électrique (1), qui comprend un moteur électrique (2) disposé dans ou sur un boîtier, une zone de raccordement se trouvant sur le boîtier, au niveau de laquelle sont disposés des contacts de raccordement électriques destinés à relier le système d'entraînement (1) à des lignes de raccordement électriques externes, le boîtier comportant au moins une première partie de boîtier (5A), reliée au moteur électrique (2) et possédant un premier et un deuxième point de liaison (8A, 8B), et une deuxième partie de boîtier (5B) possédant les contacts de raccordement électriques, laquelle peut être reliée à la première partie de boîtier (5A) sélectivement ou en alternance au niveau du premier ou du deuxième point de liaison (8A, 8B), **caractérisé en ce que** le boîtier possède une troisième partie de boîtier (5C) au niveau de laquelle est disposée au moins une résistance ballaste qui peut être reliée électriquement à un enroulement du moteur électrique (2) et/ou un module logique pour le moteur électrique (2), et **en ce que** la troisième partie de boîtier (5C) peut être reliée sélectivement ou en alternance au premier point de liaison (8A) ou au deuxième point de liaison (8B) de telle sorte que dans le cas d'une première configuration, la deuxième partie de boîtier (5B) est disposée au niveau du premier point de liaison (8A) et la troisième partie de boîtier (5C) au niveau du deuxième point de liaison (8B) et, dans le cas d'une deuxième configuration, la troisième partie de boîtier (5C) est disposée au niveau du premier point de liaison (8A) et la deuxième partie de boîtier (5B) au niveau du deuxième point de liaison (8B).

2. Système d'entraînement électrique (1) selon la revendication 1, **caractérisé en ce que** le premier point de liaison (8A) et le deuxième point de liaison (8B) sont disposés au niveau de zones de paroi de la première partie de boîtier (5A) qui suivent un tracé transversal l'une par rapport à l'autre, notamment au niveau d'une paroi latérale et d'une paroi arrière (7) de la première partie de boîtier (5A).

3. Système d'entraînement électrique (1) selon la revendication 1 ou 2, **caractérisé en ce que** la première partie de boîtier (5A) possède respectivement au niveau du premier point de liaison (8A) et du deuxième point de liaison (8B) au moins une partie de liaison par enfichage (10A, 10B) électrique, **en ce qu'**au moins une partie de liaison par enfichage homologue, adaptée aux parties de liaison par enfichage (10A, 10B), est disposée au niveau de la deuxième partie de boîtier (5B) et/ou de la troisième partie de boîtier (5C), et **en ce que** les parties de liaison par enfichage (10A, 10B) et l'au moins une partie de liaison par enfichage homologue sont disposées et configurées de telle sorte que lorsque la deuxième partie de boîtier (5B) ou la troisième partie de boîtier (5C) est reliée au premier point de liaison (8A) ou au deuxième point de liaison (8B), des éléments de contact électriques disposés au niveau de la partie de liaison par enfichage (10A, 10B) entrent en contact avec des éléments de contact homologues électriques de la partie de liaison par enfichage homologue qui leur sont associés.

4. Système d'entraînement électrique (1) selon la revendication 3, **caractérisé en ce que** les parties de liaison par enfichage (10A, 10B) sont formées par des zones de bordure d'au moins un circuit imprimé sur lequel sont disposés des composants électriques du module de commande et/ou logique pour le moteur électrique (2), et **en ce que** les éléments de contact électriques sont formés par des pistes conductrices qui se trouvent sur le circuit imprimé.

5. Système d'entraînement électrique (1) selon l'une des revendications 1 à 4, **caractérisé en ce que** la deuxième partie de boîtier (5B) possède au moins une partie de couplage par enfichage (9) au niveau de laquelle sont disposés les contacts de raccordement électriques.

6. Système d'entraînement électrique (1) selon la revendication 5, **caractérisé en ce que** la deuxième partie de boîtier (5B) est réalisée en forme de plaque et la partie de liaison par enfichage homologue est disposée au niveau du côté arrière qui fait face à la première partie de boîtier (5A) et l'au moins une partie de couplage par enfichage (9) au niveau du côté avant de la deuxième partie de boîtier (5B).

7. Système d'entraînement électrique (1) selon l'une des revendications 1 à 6, **caractérisé en ce que** les contacts de raccordement électriques comportent au moins un contact de raccordement servant à l'alimentation électrique du moteur électrique (2) et/ou du module de commande et/ou logique et au moins un contact de raccordement supplémentaire servant à la communication du module de commande et/ou logique avec une commande de niveau supérieur.
